# FASCICULE DE BREVET EUROPEEN

(11) **EP 4 206 923 B1**
(45) Date de publication et mention de la délivrance du brevet: **06.11.2024**
(21) Numéro de dépôt: 22217210.8
(22) Date de dépôt: 29.12.2022
(51) Int. Cl.: G06F 9/50

(54) **ORCHESTRATEUR DE SERVICES D'UN SYSTÈME D'ORCHESTRATION D'UN RÉSEAU DE COMMUNICATION MILITAIRE ; SYSTÈME D'ORCHESTRATION ET PROGRAMME D'ORDINATEUR ASSOCIÉS**
DIENST-ORCHESTRATOR EINES ORCHESTRIERUNGSSYSTEMS EINES MILITÄRISCHEN KOMMUNIKATIONSNETZES, ORCHESTRIERUNGSSYSTEM UND COMPUTERPROGRAMM DAFÜR
SERVICE ORCHESTRATOR OF AN ORCHESTRATION SYSTEM OF A MILITARY COMMUNICATION NETWORK; ASSOCIATED ORCHESTRATION SYSTEM AND COMPUTER PROGRAM

(30) Priorité: 30.12.2021 FR 2114678
(43) Date de publication de la demande: 05.07.2023
(73) Titulaire: THALES, 92400 Courbevoie (FR)
(72) Inventeur: SCHOLLER, Franck, 92622 GENNEVILLIERS CEDEX (FR); DU MAS DES BOURBOUX, Hélion, Marie, 91767 PALAISEAU CEDEX (FR); NAVES, Raphaël, 92300 LEVALLOIS-PERRET (FR); MONTENOT, Jean-Marc, 92622 GENNEVILLIERS CEDEX (FR)
(74) Mandataire: Lavoix

(56) Documents cités:
- WO-A1-2020/260025
- YOU YANTIAN: "Cloud Auto-Scaling Control Engine Based on Machine Learning", KTH ROYAL INSTITUTE OF TECHNOLOGY SCHOOL OF ELECTRICAL ENGINEERING AND COMPUTER SCIENCE, 29 October 2018 (2018-10-29), Stockholm, Sweden, XP055964158, Retrieved from the Internet <URL:https://www.diva-portal.org/smash/get/diva2:1263590/FULLTEXT01.pdf> [retrieved on 20220923]

## Description

La présente invention concerne les réseaux de radiocommunication militaires déployés sur le théâtre d'opération.

Dans le déploiement de centre de données de théâtre (« theatre cloud » en anglais) ou de réseaux de bordure (« Far Edge »), l'orchestration de services a besoin de déployer des configurations adaptées à la situation opérationnelle courante, tout en répondant aux usages des utilisateurs attendus.

Le document "Cloud Auto-Scaling Control Engine Based on Machine Learning" de You Yantian, publié le 29-09-2018 divulgue un orchestrateur de système distribué, mais ce dernier se limite au dimensionnement du système distribué et non pas à la configuration des composantes de réseau et des composantes de sécurité. Le document WO 2020/260025 divulgue un dispositif classique d'allocation de ressources réseau basé sur les demandes d'instanciation de fonctions de virtualisation sur les serveurs du réseau.

Actuellement, la tâche de sélection d'un modèle de fichier de configuration (« template » ou « blue print » en anglais), puis celle de paramétrisation du modèle sélectionné pour obtenir le fichier de configuration, sont laissées à un opérateur de pilotage (« floor control ») de l'orchestration de services.

Une fois un fichier de configuration préparé, celui-ci est exécuté par un système d'orchestration du réseau de manière à réaliser le déploiement correspondant à ce fichier.

Pour permettre à l'opérateur de pilotage de sélectionner le modèle de fichier de configuration le plus adapté pour répondre à une situation opérationnelle particulière, un arbre de diagnostic est couramment utilisé. Cependant, les arbres de diagnostic proposés sont complexes : ils peuvent atteindre plus de 1000 ramifications.

De plus, malgré cette complexité, les modèles de fichier de configuration proposés ne couvrent que la composante réseau du déploiement, sans prendre en compte d'autres composantes cruciales pour un réseau de théâtre, comme les composantes de système d'information - IT et de sécurité. Ils ne prennent également pas en compte la situation opérationnelle effectivement rencontrée affectant les usages, les utilisateurs, et la priorisation des flux.

Par exemple, dans une situation opérationnelle où un lien sur le réseau est rompu, on comprend que la reconfiguration du réseau pour router les flux par d'autres chemins est nécessaire. Mais il faut aussi prendre en compte les besoins applicatifs des utilisateurs et si certaines applications génèrent un flux trop important, il est préférable de les supprimer ou de les déployer dans un autre centre de données du réseau. Il faut également prendre en compte les contraintes de sécurité. Par exemple, les réseaux militaires sont cloisonnés en différents niveaux de sécurité, comme les architectures Rouges/Noire des réseaux militaires. Certains chemins sont alors interdits à certains types de flux.

Le but de la présente invention est par conséquent de résoudre ce problème.

Pour cela l'invention a pour objet un orchestrateur de services, un système d'orchestration comportant une pluralité de contrôleurs et un orchestrateur de services supervisant la pluralité de contrôleurs, et un programme d'ordinateur selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'un exemple d'infrastructure intégrant un système d'orchestration de services selon l'invention ; et,
[Fig 2] La figure 2 est une représentation sous forme de blocs fonctionnels d'un mode de réalisation du système d'orchestration de la figure 1.

### Infrastructure

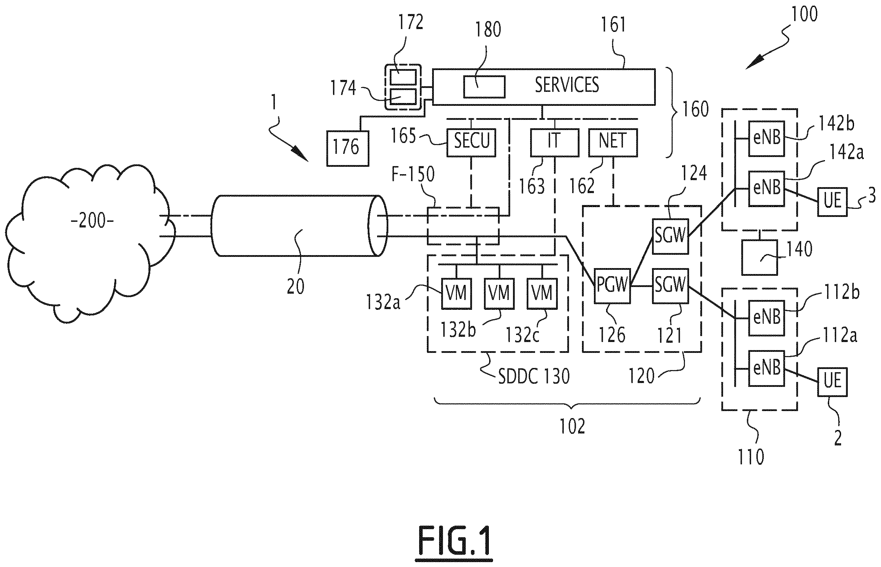

En se référant à la figure 1, l'infrastructure 1 comporte un premier réseau 100 et un second réseau 200, destinés à être fédérés au travers un réseau sous-jacent 20. Le réseau 20 est un réseau étendu - WAN (« Wide area network » en anglais).

Le premier réseau 100 comporte par exemple :
- un premier réseau radio 110, intégrant notamment une pluralité de points d'accès ou eNB (« e-Node B » en 4G) 112. Sur la figure 1 deux eNB sont représentés et référencés 112a et 112b. Un eNB permet à un équipement utilisateur - UE, tel que l'UE 2, de se connecter, au moyen d'une liaison radio, au premier réseau 100. Le premier réseau radio est de préférence un réseau de bordure embarqué par exemple dans un premier véhicule blindé, les utilisateurs de ce réseau étant des fantassins évoluant sur une première zone du théâtre d'opération.
- un second réseau radio 140, intégrant notamment une pluralité de points d'accès ou eNB (« e-Node B » en 4G) 142. Sur la figure 1 deux eNB sont représentés et référencés 142a et 142b. Un eNB permet à un UE, tel que l'UE 3, de se connecter, au moyen d'une liaison radio, au premier réseau 100. Le second réseau radio est de préférence un réseau de bordure embarqué par exemple dans un second véhicule blindé, les utilisateurs de ce réseau étant des fantassins évoluant sur une seconde zone du théâtre d'opération.
- un réseau d'accueil 102.

Le réseau d'accueil comporte :
- un réseau hôte 120. De manière schématique et particulièrement simple, le réseau d'accueil 120 comporte une passerelle SGW 121 avec le premier réseau radio 110, une seconde passerelle SGW 124 avec le second réseau radio 140, et une passerelle PGW 126 avec le réseau 20. La liaison de communication entre le réseau hôte 120 et les premier et second réseau radio 110 et 140 est par exemple une liaison sans fil, par exemple satellitaire.
- un réseau privé de théâtre constituant un centre de données ou SDDC (« Software-defined data center ») 130 qui est un réseau sécurisé comportant plusieurs machines virtuelles VM 132. Sur la figure 1, trois machines virtuelles sont représentées et référencées 132a, 132 b et 132c respectivement.
- un pare-feu FW (« Firewall ») 150 constituant une interface entre le réseau d'accueil 120 et le SDDC 130, d'une part, et le réseau 20, d'autre part.

Le premier réseau 100 comporte en outre un système d'orchestration 160 comportant une pluralité de contrôleurs et un orchestrateur de services 161 supervisant la pluralité de contrôleurs.

La pluralité de contrôleurs comporte un contrôleur de réseau 162, un contrôleur de sécurité 165 et un contrôleur IT 163. Cette répartition est effectuée selon les trois composantes de configuration du réseau d'accueil 102.

Le contrôleur de réseau 162 contrôle les machines du réseau hôte 120 pour les configurer selon des commandes de réseau reçues de l'orchestrateur de services 161. Il s'agit par exemple de paramétrer le routage d'un certain type de flux de données d'un utilisateur identifié pour assurer une certaine bande passante.

Le contrôleur de technologie d'information - IT 163 contrôle les machines du SDDC 130 pour les configurer selon des commandes d'application reçues de l'orchestrateur de services 161. Il s'agit par exemple d'instancier une application particulière en fonction d'un besoin utilisateur identifié, réserver à l'exécution de cette application une certaine ressource mémoire et de calcul d'une VM du SDDC 130, éventuellement décommissionner cette application lorsqu'elle n'est plus utilisée ou lorsque la situation opérationnelle le nécessite.

Le contrôleur de sécurité 165 contrôle le pare-feu 150, pour le configurer selon des commandes de sécurité reçues de l'orchestrateur de services 161. Il s'agit par exemple de filtrer la circulation des données d'un utilisateur authentifié en fonction de ses privilèges, stockés dans un profil d'abonné de cet utilisateur.

Plus généralement, l'orchestrateur de services 161 permet donc, à travers les contrôleurs, l'affectation de ressources physiques et/ou virtuelles disponibles en fonction des besoins des utilisateurs.

Les ressources physiques comprennent par exemple des capacités de calcul du SDDC, des capacités mémoire de travail du SDDC, des capacités de bande passante sur le réseau, des capacités de translation d'adresse réseau (« Network Address Translation - NAT) du pare-feu, etc.

Les ressources virtuelles comprennent par exemple des briques virtualisées correspondant chacune à une application permettant d'effectuer un traitement particulier sur des données spécifiques, tel que par exemple une application d'inspections en profondeur de paquets (« Deep Packet Inspection - DPI ») par le pare-feu, une application de traitement d'images par le SDDC, ou encore une application de compression d'un flux de données par le réseau hôte 120.

Adossé au système d'orchestration 160, le premier réseau 100 comporte un système de support opérationnel - OSS (« Operations Support System ») 172 et un système de support fonctionnel - BSS (« Business Support System ») 174.

Le second réseau 200 est par exemple un central de commande des opérations.

### Orchestrateur de services

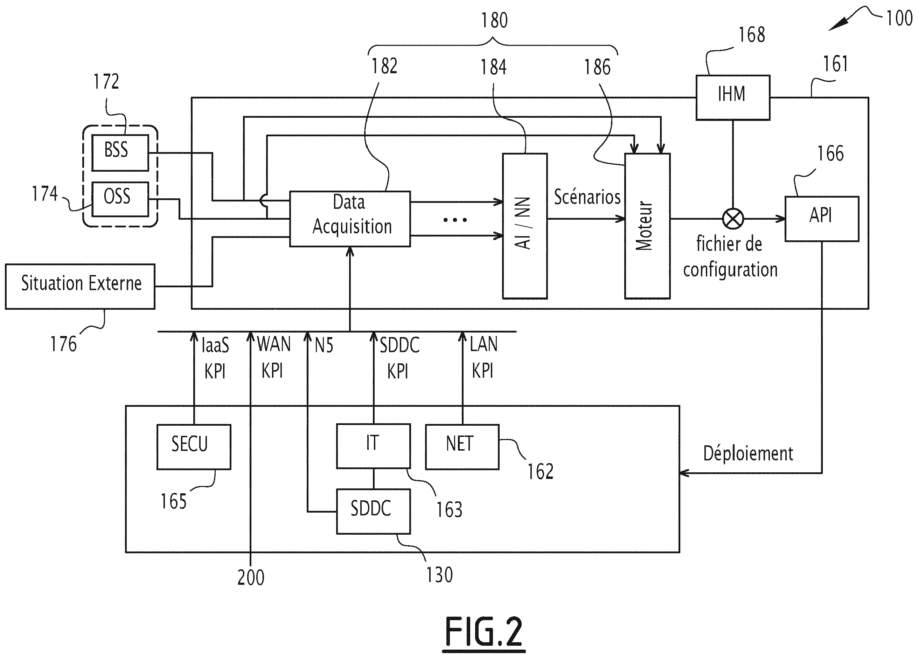

Comme illustré plus en détail sur la figure 2, l'orchestrateur de services 161 comporte un serveur d'interface de programmation d'application - APl (« Application Programming Interface ») 166, une interface homme / machine - IHM 168 et un module d'intelligence artificielle - AI 180.

Le serveur d'API 166 offre un ensemble de définitions et de protocoles qui facilitent la création et l'intégration d'applications de gestion du réseau 100.

Le module d'AI 180 est capable, à partir d'une pluralité de variables d'entrée, de générer au moins un fichier de configuration permettant de réaliser, via le serveur d'API 166, un déploiement qui répond au contexte opérationnel.

Le module d'AI 180 comporte une unité d'acquisition de données 182, une unité de réseau de neurones - NN 184 et une unité de moteur d'inférence 186.

L'unité d'acquisition de données 182 est responsable de l'acquisition d'une pluralité de variables d'entrées de description de la situation opérationnelle.

L'unité 182 peut recevoir automatiquement des données à intervalles réguliers, ou lors de l'occurrence d'un évènement particulier, ou encore interroger des dispositifs du réseau 100 pour, en retour, recevoir des données.

La pluralité de variables d'entrée comporte au moins des variables quantitatives sur l'état courant de la composante réseau, sur l'état courant de la composante IT et sur l'état courant de la composante sécurité. Il s'agit par exemple d'une pluralité d'indicateurs de performance clés - KPls (« key performance indicators »).

Les variables quantitatives sur l'état courant de la composante réseau sont remontées par le contrôleur 162 pour les données du réseau local LAN, mais également par l'orchestration de service du second réseau 200 pour les données du réseau étendu WAN. Elles comprennent par exemple :
- la qualité de service - QoS sur les réseaux 110 et 140 ;
- la qualité de service - QoS sur le réseau 120 et sur le SDDC 130 ; et,
- la qualité de service - QoS sur le réseau 20 ;

Plus généralement, les protocoles de routage, comme BGP-LS (« Border Gateway Protocol Link-State ») et OSPF-TE (« Open Shortest Path First Traffic Engineering »), fournissent des informations de trafic permettant d'obtenir des données sur l'état des liens : bandes passantes, latences, QoS, etc.

Les variables quantitatives sur l'état courant de la composante sécurité sont remontées par le contrôleur 165. Elles comprennent par exemple :
- indicateurs générés par une ou plusieurs sonde(s) de gestion de l'information et des événements de sécurité - SIEM (« security information and event management »). Ce sont toutes les sondes placées dans le réseau permettant de détecter d'éventuelles attaques informatiques, comme une attaque par déni de service - DDoS (« distributed denial of service»), une usurpation d'identité, une intrusion détectée par un dispositif IDS (« intrusion détection system »), une fuite de donnée détectée par un dispositif DLP (« data loss prévention »), une analyse des journaux d'évènement ou fichiers « Logs », une identification de menace par détection des signatures d'attaques, une surcharge d'un port de communication, etc.

Les variables quantitatives sur l'état courant de la composante système d'information - IT sont remontées par le contrôleur 163. Elles comprennent par exemple :
- indicateurs sur l'état (CPU, mémoire...) de chaque VM du SDDC : CPU restant / alloué, mémoire RAM restante / allouée, capacité de stockage sur les disques restante / allouée, la charge de chaque port virtuel associé à chaque VM, etc.
- Pour le SDDC dans son ensemble, il faut prendre en compte l'ensemble du CPU, de la mémoire RAM, des capacités de stockage, des charges des ports, etc. des VM, ainsi que l'état du bus de communication entre les VM.

Avantageusement, des variables quantitatives sur l'état courant du système d'information peuvent être fournies directement par les VM du SDDC 130, par exemple via une interface du type N5. Il s'agit d'une interface 3GPP qui permet, dans son usage standard, aux applications de communiquer avec la fonction de contrôle de politique (« Policy Control). Elle est ici avantageusement détournée afin de permettre aux applications de communiquer avec le service d'orchestration afin de demander l'allocation dynamique de ressources additionnelles, suite par exemple à une situation d'urgence. Cette allocation de ressources est octroyée par l'orchestrateur de service et déployée via le contrôleur IT qui contrôle le SDDC.

Par exemple, une application peut demander une qualité de service - QoS spécifique (composée par exemple d'un taux de bits garanti - GBR (« guaranteed bit rate »), d'une bande passante et d'une latence) pour un utilisateur donné durant un certain intervalle temporel suite à une urgence.

Avantageusement, la pluralité de variables d'entrée comporte en outre des variables supplémentaires.

Ainsi, le module 182 reçoit des informations du BSS, c'est-à-dire les objectifs ou contraintes métiers, c'est-à-dire l'utilisation recherchée du réseau 100. Elles comprennent par exemple :
- indicateurs d'usage : nombre d'utilisateur du réseau 100 et leurs profils d'abonné (définissant notamment la priorité des communications entre utilisateurs) ;
- indicateurs de priorisation ou type de mission planifiée et importance ; et,
- liste des applications nécessaires à la mission (Service Reconnaissance imagerie, aide au tir, ...)

En plus de ces informations, des variables d'ordre de service du réseau peuvent être fournies telles que par exemple un profil d'abonné de chaque utilisateur comportant par exemple : un niveau de priorité permettant de prioriser ses communications ; des droits d'accès permettant d'autoriser l'accès à certains contenus ; des privilèges permettant de définir les applications que cet utilisateur peut utiliser, etc.

Le module 182 reçoit également des informations de l'OSS, c'est-à-dire des variables d'ordre opérationnel sur le réseau 100, comme par exemple: les plages d'adressage IP d'un groupe d'utilisateurs, d'un point d'accès ; les adresses IP de chaque VM et port virtuel ; les capacités physiques de chaque serveurs, commutateur, routeur... ; les capacités maximum en termes de bande passante des liens, de taille CPU, mémoires RAM, capacité de stockage des équipements...

Enfin, le module 182 reçoit avantageusement des données de description externe de la situation opérationnelle, permettant de l'appréhender. Elles comprennent par exemple :
- des informations météorologiques ;
- un type d'attaque ;
- un type d'ennemis.

Par exemple, des capteurs connectés (référencés de manière générale par le chiffre 176 sur les figures) comportent tout ou parties des capteurs suivants : capteurs de gaz, capteurs d'incendies, capteurs de bruits, capteurs chimique, capteurs vidéo, capteurs de température, capteurs d'humidités, capteurs de détection d'intrusion mécanique (ouverture de portes, fenêtres...), centre d'information (suite à appels aux services de secours ou autres).

En fait, il s'agit ici de toutes les informations externes au réseau permettant d'intégrer la dimension opérationnelle, aux dimension réseaux, IT, et sécuritaire.

L'unité de réseau de neurone - NN 184 met en oeuvre un algorithme du type réseau de neurones artificiels, de préférence un perceptron multicouche (« multilayer perceptron »), de préférence encore du type totalement connecté (« fully connnected »).

L'unité 184 est capable, à partir des données acquises par l'unité 182, de déterminer au moins un scénario.

Un scénario est un modèle (« template » en anglais) de fichier de configuration. Il comporte des commandes selon les trois composantes IT, réseau, et sécurité du réseau.

L'algorithme du type réseau de neurones artificiels réalise une opération de classification de la situation opérationnelle du premier réseau 100 décrite par les variable d'entrée.

Avantageusement, pour une situation opérationnelle, l'algorithme est capable d'associer un score à chaque scénario d'une pluralité de scénarios prédéfinis. Les scénarios prédéfinis résultent d'un travail d'expertise.

L'algorithme est alors capable de produire une liste de scénarios. Cette liste comporte par exemple les N scénarios présentant les meilleurs scores pour la situation opérationnelle rencontrée. N est un entier qui vaut par exemple 3.

La phase d'apprentissage permettant de paramétrer l'algorithme de réseau de neurones artificiels est fondée sur l'utilisation de lots d'ensembles de données étiquetées.

Un ensemble de données étiquetées associe une pluralité de valeurs des données d'entrée décrivant une situation opérationnelle avec le meilleur scénario permettant de configurer le réseau pour répondre à cette situation opérationnelle.

La phase d'apprentissage a par conséquent pour but que la sortie calculée par l'algorithme de réseau de neurones permettent de retrouver ce meilleur scénario.

Avantageusement, la phase d'apprentissage peut être répétée en adaptant les scénarios prédéfinis à partir d'un retour d'expérience.

L'unité de moteur d'inférence 186 est capable, pour chaque scénario de la liste fournie par l'unité 184, de déterminer un fichier de configuration prêt à être exécuté par le serveur d'API 166 pour réaliser le déploiement correspondant dans le réseau 100.

L'unité 186 utilise les données fournies par le BSS et/ou l'OSS pour instancier les valeurs des paramètres d'un scénario et obtenir le fichier de configuration associé. Ainsi, le fichier obtenu tient compte des contraintes opérationnelles de chaque utilisateur et matériel.

Un fichier de configuration comporte des commandes selon les trois dimensions réseau, IT et sécurité.

Avantageusement, l'unité de moteur d'inférence 186 propose à l'opérateur, via l'IHM 168, les N meilleurs scénarios indiqués dans la liste (ou les N fichiers de configuration associés). C'est alors à l'opérateur de choisir le scénario devant être déployé, c'est-à-dire le fichier de configuration devant être transmis au serveur d'API 166.

En variante, c'est l'unité de réseau de neurones 184 qui propose les N meilleurs scénarios à l'opérateur. Parallèlement, ces N scénarios sont transmis à l'unité de moteur d'inférence 186 pour finaliser les fichiers de configuration associés. Seul le fichier du scénario effectivement retenu par l'opérateur sera transmis au serveur d'API 166 pour exécution. Cette variante présente l'avantage de laisser à l'opérateur un certain temps pour sélectionner un scénario parmi les N scénarios qui s'affichent sur l'IHM 168, les fichiers de configuration étant préparés pendant ce temps.

Avantageusement, les scénarios sont affichés sur l'IHM 168 avec une description ou un justificatif de leur intérêt vis-à-vis de la situation opérationnelle rencontrée afin d'éclairer le choix de l'opérateur.

### Exemple de cas d'usage

On peut par exemple considérer le cas d'un attentat dans un métro.

Les services d'urgence reçoivent un appel décrivant le déclenchement d'un bombe dans le métro avec dégagement de fumée.

L'information est relayée par les services d'urgence vers les forces de l'ordre, qui lancent une intervention dans le métro.

Les forces de l'ordres envoient des équipes de secours sur place, mais sans connaître la situation réelle et la nature de l'attaque. Il peut par exemple s'agir d'une attaque au gaz sarin plutôt qu'une bombe.

L'exécution du module d'AI 180 permet de déployer quasiment instantanément une première configuration du réseau telle que :
Le service critique de gestion de crise puisse recevoir les images des caméras de surveillance du métro : le système d'orchestration met en place des routes sécurisées avec le bon débits et des QoS permettant l'acheminement d'un flux vidéo prioritaire ;
Le service critique de gestion de crise puisse recevoir les mesures des capteurs de mesure de la qualité de l'air du métro : mise en place d'une route spécifique prioritaire pour récupérer les mesures, modifier la fréquences d'acquisition des mesures.

Suite aux résultats de l'analyse des images et de la qualité de l'air permettant d'avoir de nouvelles variables d'entrée, le module d'AI propose une seconde configuration du réseau telle que :
les pompiers qui interviennent dans le métro, bénéficient prioritairement de l'ensemble des ressources de communication en sous-sol (par exemple du type WiFi) ;
Quant aux autres équipes de secours, en surface, les policiers qui sécurisent le périmètre et facilitent l'acheminement des secours bénéficient de 70 % de la capacité du réseau de radiocommunication (par exemple 4G) alors que le SAMU, pour l'évacuation des blessés, bénéficie de 25 % de la capacité de ce même réseau.

Au cours des opérations, on s'aperçoit qu'il est nécessaire de mettre en place un hôpital de campagne sur le terrain avec des moyens de diagnostique poussés. Une troisième configuration du réseau est proposée par le module d'AI et déployée telle que :
Déploiement d'une application d'analyse de radiographies X sur une VM du SDDC, réallocation d'une part des ressources de communication initialement allouées aux policiers vers l'hôpital de campagne permettant aux médecins d'accéder à l'application d'analyse de radiographies X.

En fin de crise, une fois la situation opérationnelle normal retrouvée, le module d'AI-propose un déploiement permettant de configurer l'ensemble des dimensions du réseau (IT, Sécu, Réseau) pour revenir dans un état nominal.

### Avantages

L'orchestrateur de services venant d'être présenté permet le déploiement instantané et automatique du meilleur scénario au sein du réseau qu'il contrôle pour faire face à une modification du contexte opérationnel.

L'orchestrateur de services lorsqu'il nécessite l'intervention d'un opérateur peut être vu comme un système d'aide à la prise de décision.

Les applications militaires des réseaux de communication entrainent un changement de paradigme et nécessitent de pouvoir s'adapter rapidement et intelligemment aux différentes situations opérationnelles rencontrées. Le présent orchestrateur de service, en prenant en compte d'un très grand nombre d'indicateurs, qui plus est selon toutes les dimensions d'un réseau de communication militaire, permet de répondre à ce besoin d'adaptation.

C'est également un outil permettant de réduire le temps réponse entre l'occurrence d'une situation opérationnelle nouvelle (notamment une situation de crise) et le déploiement d'une configuration particulière du réseau permettant une adaptation à cette situation.

## Revendications

1. Orchestrateur de services (161) d'un système d'orchestration (160) d'un réseau de communication (100) militaire, capable de générer des commandes vers une pluralité de contrôleurs, la pluralité de contrôleurs comportant au moins un contrôleur de réseau (162), un contrôleur de système d'information (163) et un contrôleur de sécurité (165), **caractérisé en ce qu'**il comporte un module d'intelligence artificielle - AI (180) et un serveur d'interface de programmation d'application - API (166), le module d'AI comportant :
- une unité d'acquisition de données (182), adaptée pour acquérir une pluralité de variables d'entrée de description d'une situation opérationnelle ;
- une unité de réseau de neurones (184), capable, à partir de la pluralité de variables d'entrée acquises par l'unité d'acquisition de données (182), de déterminer au moins un scénario, un scénario étant un modèle de fichier de configuration ; et,
- une unité de moteur d'inférence (186), capable d'instancier des paramètres du scénario fourni par l'unité de réseau de neurones (184), pour déterminer un fichier de configuration prêt à être exécuté par le serveur d'API (166), le fichier de configuration comportant des commandes selon les composantes de réseau, de système d'information et de sécurité du réseau de communication (100),
le fichier de configuration préparé par l'unité de moteur d'inférence (186) étant transmis au serveur d'API (166) pour réaliser un déploiement dans le réseau de communication (100).

2. Orchestrateur de services (161) selon la revendication 1, dans lequel la situation opérationnelle est décrite par des variables d'entrée quantitatives sur l'état courant de la composante réseau, sur l'état courant de la composante système d'information et sur l'état courant de la composante sécurité du réseau de communication (100).

3. Orchestrateur de services (161) selon la revendication 2, dans lequel la situation opérationnelle est, en outre, décrite par des variables d'entrée provenant d'un système de support opérationnel - OSS (172), d'un système de support fonctionnel - BSS (174), et/ou de dispositifs externes.

4. Orchestrateur de services (161) selon l'une quelconque des revendications 1 à 3, dans lequel l'unité de réseau de neurones (184) met en oeuvre un algorithme du type réseau de neurones artificiels, de préférence un perceptron multicouche, de préférence encore du type totalement connecté.

5. Orchestrateur de services (161) selon la revendication 4, dans lequel l'unité de réseau de neurones (184) est capable d'associer un score à chaque scénario d'une pluralité de scénarios prédéfinis, et de produire une liste de scénarios, la liste de scénarios regroupant les N scénarios présentant les meilleurs scores pour la situation opérationnelle courante.

6. Orchestrateur de services (161) selon l'une quelconque des revendications 1 à 5, dans lequel l'unité de moteur d'inférence (186) utilise des données fournies par un système de support opérationnel - OSS (172) et/ou par un système de support fonctionnel - BSS (174), pour instancier les valeurs des paramètres d'un scénario et obtenir le fichier de configuration associé.

7. Système d'orchestration (160) comportant une pluralité de contrôleurs et un orchestrateur de services supervisant la pluralité de contrôleurs, la pluralité de contrôleurs comportant au moins un contrôleur de réseau (162), un contrôleur de système d'information (163) et un contrôleur de sécurité (165), **caractérisé en ce que** l'orchestrateur de services est conforme à l'une quelconque des revendications 1 à 6.

8. Programme d'ordinateur comportant des instructions logicielles qui, lorsqu'elles sont exécutées par un orchestrateur de services d'un réseau de communication (100), fournissent les unités d'acquisition de données, de réseaux de neurones et de moteur d'inférence, de sorte que l'orchestrateur de services soit conforme aux revendications 1 à 6.

## Patentansprüche

1. Service-Orchestrator (161) eines Orchestrierungssystems (160) eines militärischen Kommunikationsnetzes (100), der in der Lage ist, Befehle an eine Vielzahl von Steuerungen zu erzeugen, wobei die Vielzahl von Steuerungen mindestens eine Netzsteuerung (162), eine Informationssystemsteuerung (163) und eine Sicherheitssteuerung (165) umfasst, **dadurch gekennzeichnet, dass** sie ein Modul für künstliche Intelligenz - Al (180) und einen Server für eine Anwendungsprogrammierschnittstelle - API (166) umfasst, das Al-Modul umfassend:
- eine Datenerfassungseinheit (182), die angepasst ist, um eine Vielzahl von Eingangsvariablen zur Beschreibung einer Betriebssituation zu erfassen;
- eine Neuronennetzeinheit (184), die in der Lage ist, anhand der Vielzahl von Eingangsvariablen, die von der Datenerfassungseinheit (182) erfasst werden, mindestens ein Szenario zu bestimmen, wobei ein Szenario ein Konfigurationsdateimodell ist; und,
- eine Inferenzmaschineneinheit (186), die in der Lage ist, Parameter des von der Neuronennetzeinheit (184) bereitgestellten Szenarios zu instanziieren, um eine Konfigurationsdatei zu bestimmen, die bereit ist, von dem API-Server (166) ausgeführt zu werden, die Konfigurationsdatei umfassend Befehle gemäß den Netz-, Informationssystem- und Sicherheitskomponenten des Kommunikationsnetzwerks (100),
wobei die von der Inferenzmaschineneinheit (186) vorbereitete Konfigurationsdatei an den API-Server (166) übertragen wird, um einen Einsatz in dem Kommunikationsnetzwerk (100) zu realisieren.

2. Service-Orchestrator (161) nach Anspruch 1, wobei die Betriebssituation durch quantitative Eingangsvariablen zum aktuellen Zustand der Netzkomponente, zum aktuellen Zustand der Informationssystemkomponente und zum aktuellen Zustand der Sicherheitskomponente des Kommunikationsnetzes (100) beschrieben wird.

3. Service-Orchestrator (161) nach Anspruch 2, wobei die Betriebssituation zusätzlich durch Eingangsvariablen von einem Betriebsunterstützungssystem - OSS (172), einem Funktionsunterstützungssystem - BSS (174) und/oder von externen Vorrichtungen beschrieben wird.

4. Service-Orchestrator (161) nach einem der Ansprüche 1 bis 3, wobei die Neuronennetzeinheit (184) einen Algorithmus vom Typ künstliches Neuronennetz, vorzugsweise ein mehrschichtiges Perzeptron, bevorzugter vom Typ vollständig verbunden implementiert.

5. Service-Orchestrator (161) nach Anspruch 4, wobei die Neuronennetzeinheit (184) in der Lage ist, mit jedem Szenario einer Vielzahl von vordefinierten Szenarien eine Punktzahl zu assoziieren und eine Liste von Szenarien zu erzeugen, wobei die Liste von Szenarien die N Szenarien zusammenfasst, die die höchsten Punktzahlen für die aktuelle Betriebssituation aufweisen.

6. Service-Orchestrator (161) nach einem der Ansprüche 1 bis 5, wobei die Inferenzmaschineneinheit (186) Daten verwendet, die von einem Betriebsunterstützungssystem -OSS- (172) und/oder von einem Funktionsunterstützungssystem - BSS (174) bereitgestellt werden, um die Werte der Parameter eines Szenarios zu instanziieren und die assoziierte Konfigurationsdatei zu erlangen.

7. Orchestrierungssystem (160), umfassend eine Vielzahl von Steuerungen und einen Service-Orchestrator, der die Vielzahl von Steuerungen überwacht, die Vielzahl von Steuerungen umfassend mindestens eine Netzsteuerung (162), eine Informationssystemsteuerung (163) und eine Sicherheitssteuerung (165), **dadurch gekennzeichnet, dass** der Service-Orchestrator einem der Ansprüche 1 bis 6 entspricht.

8. Computerprogramm, umfassend Softwareanweisungen, die, wenn sie von einem Service-Orchestrator eines Kommunikationsnetzes (100) ausgeführt werden, die Datenerfassungs-, Neuronennetz- und Inferenzmaschineneinheit bereitstellen, sodass der Service-Orchestrator den Ansprüchen 1 bis 6 entspricht.

## Claims

1. Service orchestrator (161) of an orchestration system (160) of a military communication network (100), capable of generating commands to a multitude of controllers, the multitude of controllers comprising at least one network controller (162), an information system controller (163) and a security controller (165), **characterized in that** it comprises an artificial intelligence - AI module (180) and an application programming interface - API - server (166), the AI module comprising:
- a data acquisition unit (182), adapted to acquire a multitude of input variables describing an operational situation;
- a neural network unit (184), capable, from the multitude of input variables acquired by the data acquisition unit (182), of determining at least one scenario, a scenario being a configuration file model; and,
- an inference engine unit (186), capable of instantiating parameters of the scenario provided by the neural network unit (184), to determine a configuration file ready to be executed by the API server (166), the configuration file comprising commands according to the network, information system and security components of the communication network (100),
the configuration file prepared by the inference engine unit (186) being transmitted to the API server (166) for deployment in the communication network (100).

2. A service orchestrator (161) according to claim 1, wherein the operational situation is described by quantitative input variables on the current state of the network component, on the current state of the information system component and on the current state of the security component of the communication network (100).

3. A service orchestrator (161) according to claim 2, wherein the operational situation is further described by input variables from an operational support system - OSS (172), a functional support system - BSS (174), and/or external devices.

4. A service orchestrator (161) according to any one of claims 1 to 3, in which the neural network unit (184) implements an algorithm of the artificial neural network type, preferably a multilayer perceptron, more preferably still of the fully connected type.

5. A service orchestrator (161) as claimed in claim 4, wherein the neural network unit (184) is capable of associating a score with each of a plurality of predefined scenarios, and producing a list of scenarios, the list of scenarios grouping together the N scenarios with the best scores for the current operational situation.

6. A service orchestrator (161) according to any one of claims 1 to 5, wherein the inference engine unit (186) uses data provided by an operational support system - OSS (172) and/or by a functional support system - BSS (174), to instantiate the values of the parameters of a scenario and obtain the associated configuration file.

7. An orchestration system (160) comprising a multitude of controllers and a service orchestrator overseeing the multitude of controllers, the multitude of controllers comprising at least a network controller (162), an information system controller (163) and a security controller (165), **characterised in that** the service orchestrator is in accordance with any one of claims 1 to 6.

8. A computer program comprising software instructions which, when executed by a service orchestrator of a communications network (100), provide the data acquisition, neural network and inference engine units, such that the service orchestrator complies with claims 1 to 6.
